Europäisches Patentamt

European Patent Office

Office européen des brevets

(19)

(11) Veröffentlichungsnummer: **0 040 706**
**B1**

## EUROPÄISCHE PATENTSCHRIFT

(12)

(45) Veröffentlichungstag der Patentschrift:
11.09.85

(21) Anmeldenummer: 81103175.6

(22) Anmeldetag: 28.04.81

(51) Int. Cl.⁴: **G 02 B 6/34**

(54) Optisches Kommunikationssystem.

(30) Priorität: 24.05.80 DE 3019956

(43) Veröffentlichungstag der Anmeldung:
02.12.81 Patentblatt 81/48

(45) Bekanntmachung des Hinweises auf die Patenterteilung:
11.09.85 Patentblatt 85/37

(84) Benannte Vertragsstaaten:
DE FR GB IT

(56) Entgegenhaltungen:
US - A - 4 185 885
US - A - 4 198 117

IBM TECHNICAL DISCLOSURE BULLETIN, Band 22, Nr. 12, Mai 1980, Seiten 5288-5290, New York, U.S.A., W.B. ARCHEY et al.: "Low loss optical coupler"
1977 INTERNATIONAL CONFRENCE ON INTEGRATED OPTICS AND OPTICAL FIBER COMMUNICATION, 18. - 20, Juli 1977, in Tokyo und 22. Juli 1977 in Osaka, JP. K. KOBAYASHI et al.: "Micro-optics devices for branching, coupling, multiplexing and demultiplexing", Seiten 367-370

(73) Patentinhaber: IBM DEUTSCHLAND GMBH, Pascalstrasse 100, D-7000 Stuttgart 80 (DE)
(84) Benannte Vertragsstaaten: DE

(73) Patentinhaber: International Business Machines Corporation, Old Orchard Road, Armonk, N.Y. 10504 (US)
(84) Benannte Vertragsstaaten: FR GB IT

(72) Erfinder: Korth, Hans-Erdmann, Sandberger Strasse 34, D-7000 Stuttgart 1 (DE)

(74) Vertreter: Teufel, Fritz, Dipl.-Phys., IBM Deutschland GmbH. Europäische Patentdienste Postfach 265, D-8000 München 22 (DE)

## Beschreibung

Die Erfindung betrifft ein optisches Kommunikationssystem nach dem Oberbegriff von Anspruch 1.

Die optische Nachrichtenübertragung über Lichtwellenleiter, sogenannte optische Fasern, gewinnt aufgrund der damit erreichbaren hohen Bandbreite, der mittlerweile erzielten geringen Dämpfung und des sich abzeichnenden günstigen Herstellpreises für derartige Fasern eine immer größere Bedeutung. Die möglichen Anwendungsgebiete decken ein sehr weites Spektrum ab: Es reicht von der Nachrichtenfernübertragung (Telefon, Daten, Fernsehen) bis zur internen Informationsübertragung in abgeschlossenen Systemen (innerhalb einer Fabrik zur Prozeßsteuerung, innerhalb eines Rechners als Verbindungskabel usw.). In rauhen Umgebungen, z. B. bei der Datenübermittlung innerhalb einer Fabrik oder eines Automobils, hat die optische Informationsübertragung den Vorteil der großen Störsicherheit gegenüber elektromagnetischen Störungen.

Als Organisationsform eines Übertragungssystems ist insbesondere bei lokaler Übertragung mit vielen Anschlußstellen das Prinzip einer Sammelleitung wünschenswert, wie sie in herkömmlichen elektrischen Informations-Übertragungseinrichtungen bekannt ist. Die einzelnen Sende- und Empfangsstationen werden dabei alle an einen gemeinsamen Übertragungskanal, eben die Sammelleitung (den Bus), angeschlossen. Die Zahl der anschließbaren Einheiten ist somit nicht durch die Struktur des Übertragungsweges bestimmt, sondern nur durch dessen (elektrische) Belastbarkeit. Dieses Prinzip eröffnet somit eine große Flexibilität im Hinblick auf spätere Veränderungen oder Erweiterungen. Für viele Anwendungsfälle ist es auch zweckmäßig, die Sammelleitung als geschlossenen Ring auszubilden.

In elektrischen Systemen kann die Sammelleitung entweder im Zeitmultiplex- oder im Frequenzmultiplexverfahren betrieben werden. Im ersten Fall erhält jede angeschlossene Einheit die Sammelleitung für eine bestimmte Zeit zugewiesen, im zweiten Fall filtert jedes angeschlossene Gerät die ihm zugewiesene Frequenz aus.

Auf dem Gebiet der optischen Nachrichtenübertragung bietet sich ein Lichtwellenleiter aufgrund seiner sehr hohen Übertragungskapazität im Prinzip als Sammelleitung an, da eine große Zahl breitbandiger Einzelkanäle zur Verfügung steht. Aufgrund der begrenzten Modulierbarkeit der bekannten Lichtsender und -empfänger (bis ungefähr $10^8$ Hz) wäre an sich bei Lichtwellenleitern das Frequenzmultiplexverfahren vorteilhaft.

Ein derartiges optisches Breitband-Kommunikationssystem mit Frequenzcodierung erfordert zu seiner Realisierung jedoch optische Koppelelemente (für Verbindungen, Abzweigungen, Anzapfungen usw.) und optische Frequenzcodierer höchster Bandbreite, die noch nicht zur Verfügung stehen.

Es ist zwar ein optischer Übertragungskanal mit einem Lichtwellenleiter und Frequenzmultiplexierung vorgeschlagen worden (deutsche Offenlegungsschrift 25 01 791), doch befinden sich Sender und Empfänger jeweils am Ende der optischen Faser und nicht längs der optischen Faser verteilt an beliebigen Anschlußpunkten, wie es für ein echtes Bussystem erforderlich wäre.

Die bisher bekanntgewordenen Übertragungssysteme mit optischen Fasern arbeiten deshalb nach dem Einkanalprinzip, bei dem nur eine Wellenlänge verwendet wird. Zur Übertragung werden dann entweder direkte Verbindungen mit optischen Fasern zwischen Sender und Empfänger geschaltet oder nach dem Zeitmultiplexverfahren gearbeitet (z. B. entsprechend der deutschen Offenlegungsschrift 27 28 686, in der eine optische Sammelleitung mit Zeitmultiplexverfahren beschrieben wird); dabei bleibt ein Großteil der theoretischen Bandbreite des Übertragungsmediums Licht unausgenutzt.

Um ein in der Praxis realisierbares, modulares optisches Kommunikationssystem aufbauen zu können, müssen also folgende Bedingungen erfüllt sein:

### 1. Einfache Ankoppelbarkeit an die optische Sammelleitung

Die Anschlußpunkte für die einzelnen anzuschließenden Geräte müssen längs des Lichtwellenleiters beliebig definiert werden können. Die zum Ein- und Auskoppeln von Licht benötigten Elemente sollen möglichst einfach, klein und leicht einzubauen sein.

### 2. Unabhängigkeit verschiedener Anschlüsse

Datenübertragungen in einem bestimmten Wellenlängenbereich sollen zwischen zwei oder mehreren Anschlüssen möglich sein, ohne andere Übertragungen zu stören.

### 3. Modularität

Die einzelnen Komponenten müssen strikt modular aufgebaut und ohne Justierarbeiten austauschbar sein.

### 4. Richteigenschaften

Die Übertragung muß in beiden Richtungen möglich sein; Koppelelemente mit und ohne Richtcharakteristik sind erforderlich.

### 5. Ausfallsicherheit

Bei einem System mit einer großen Zahl von Anschlüssen muß Vorsorge gegen den Ausfall einzelner Komponenten getroffen sein; beispielsweise darf das Einfügen eines neuen Anschlusses den regulären Betrieb nicht stören; bei Wartungsarbeiten müssen Teilabschnitte der Übertragungsstrecke überbrückt werden können.

### 6. Geringe Verluste

Alle verwendeten optischen Bauelemente dürfen nur sehr geringe optische Verluste aufweisen, um große Abstände zwischen den Auffrischverstärkern zu ermöglichen. Anschlüsse, die zeitweise nicht mit einem Gerät belegt sind, sollen zu keiner Beeinträchtigung der Übertragung führen.

Im Stand der Technik sind bisher keine Vorschläge bekanntgeworden, die alle diese Anforderungen erfüllen.

Aus dem Artikel »Micro-Optics Devices for Branching, Coupling, Multiplexing and Demultiplexing« von K. Kobayashi et al in 1977 International Conference on Integrated Optics and Optical Fiber Communication, 18. bis 20. Juli 1977, Tokyo, Seiten 367 bis 370, sind zwar Bauelemente für den Anschluß an eine optische Sammelleitung mit Frequenzmultiplexübertragung bekanntgeworden, die mit sogenannten Stablinsen arbeiten und damit Ein- und Auskoppelelemente sowie Multiplexer und Demultiplexer realisieren. Diese optischen Bauelemente sind jedoch nicht steckbar und erfordern aufgrund des verwendeten radialen Brechungsindexprofils einen hohen Herstellaufwand. Ein wahlweiser Anschluß an vorbereiteten Stellen der Sammelleitung ist mit derartigen Elementen nicht möglich; diese Elemente können nämlich nicht trennbar ausgestaltet werden, da sie sonst im getrennten Zustand nicht tolerierbar hohe Lichtverluste in der Sammelleitung hervorrufen würden. Optische Frequenzmultiplexer und Demultiplexer, die ebenfalls mit Stablinsen arbeiten, deren eine Endfläche mit einem optischen Stufengitter versehen ist, sind außerdem aus der US Patentschrift 4 198 117 bekannt. Auch die Elemente dieser Patentschrift sind jedoch nicht steckbar.

Die vorliegende Erfindung stellt sich daher die Aufgabe, ein optisches Kommunikationssystem der eingangs genannten Art anzugeben, das nach dem Prinzip der Sammelleitung arbeitet, eine sehr hohe Übertragungsbandbreite aufweist, flexibel, ausfallsicher und erweiterbar ist und mit einfach herzustellenden, steckbaren Elementen aufgebaut werden kann, die im getrennten Zustand keine Lichtverluste in der Sammelleitung hervorrufen.

Diese Aufgabe wird durch die in den Ansprüchen 1 und 2 gekennzeichnete Erfindung gelöst; besondere Ausführungsarten der Erfindung sind in den abhängigen Ansprüchen gekennzeichnet.

Zum Aufbau eines nach dem Frequenzmultiplexverfahren arbeitenden optischen Übertragungssystems schlägt die Erfindung wellenlängenabhängige, steckbare Koppelelemente vor, mit denen einzelne Kanäle (Frequenzen) oder ganze Übertragungsbänder verlustlos ein- und ausgekoppelt werden können. Die Koppelelemente sind als selbstkollimierende, optische Komponenten ausgebildet, die das aus der angeschlossenen Faser austretende Licht entweder wellenlängenabhängig an die angeschlossene Einheit weitergeben oder, wenn keine Einheit angeschlossen ist, praktisch verlustlos wieder in die Faser zurückreflektieren. Zum wellenlängenabhängigen Codieren und Decodieren werden in diese selbstkollimierenden optischen Komponenten dispersive Elemente eingefügt. Mit Hilfe derartiger steckbarer Verbindungen können auf einfache Weise Geräte an die optische Übertragungsleitung angeschlossen werden; ebenso sind damit Verzweigungen oder Überbrückungen der optischen Übertragungsleitung möglich.

Neben der hohen Übertragungsbandbreite hat das optische Frequenzmultiplexverfahren den Vorteil, daß zur Herstellung von Auffrischverstärkern eine analoge Breitbandverstärkung mit Farblasern erfolgen kann und keine aufwendige Impulsverstärkung (mit nachfolgender Impulswiederherstellung) erforderlich ist.

Wege zur Ausführung der Erfindung werden nun anhand von Zeichnungen näher erläutert. Es zeigt

Fig. 1 die schematische Darstellung eines modularen, faseroptischen Kommunikationssystems mit Koppelelementen und Frequenzcodierern,

Fig. 2A die schematische Darstellung eines selbstkollimierenden, optischen Koppelelements für eine optische Sammelleitung,

Fig. 2B ein selbstkollimierendes, optisches Koppelelement mit Dachkantprisma im getrennten Zustand,

Fig. 2C das Dachkant-Koppelelement von Fig. 2B im zusammengesteckten Zustand,

Fig. 2D ein selbstkollimierendes Koppelelement nach Fig. 2A mit integrierter, optischer Linse,

Fig. 2E ein optisches Koppelelement nach Fig. 2A mit Hohlspiegeln und außeraxialem Strahlengang,

Fig. 2F ein selbstkollimierendes Koppelelement nach Fig. 2A mit einem Rotationsparaboloid,

Fig. 3A einen Farbcodierer zum Ein- oder Auskoppeln einer bestimmten Wellenlänge in die optische Sammelleitung mit einem schmalbandigen Interferenzfilter,

Fig. 3B einen Farbcodierer mit einem Stufengitter als dispersivem Element und einer linearen Anordnung von LED's bzw. Photodioden,

Fig. 3C einen Farbcodierer mit einem Stufengitter und über optische Fasern angeschlossenen elektro-optischen Transducern,

Fig. 3D einen Farbcodierer mit einstellbarer Wellenlänge,

Fig. 4 einen direkt in eine optische Übertragungsleitung integrierbaren Farbcodierer mit einem dielektrischen Reflexionsgitter,

Fig. 5A, B gegen Ausfall geschützte faseroptische Übertragungssysteme.

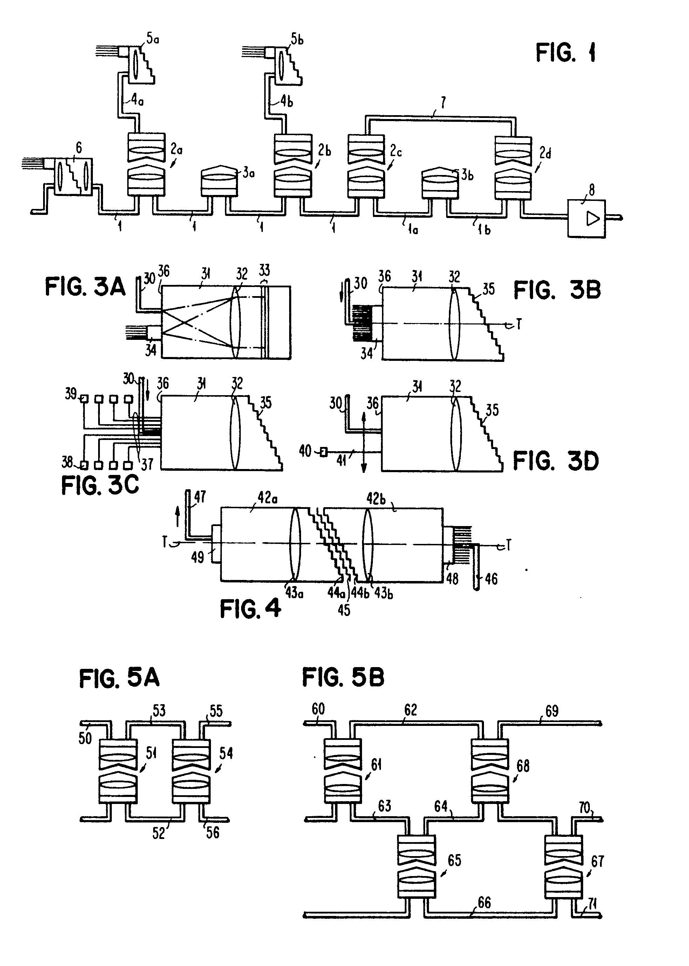

Fig. 1 zeigt in schematischer Weise einen Ausschnitt aus einem faseroptischen Kommunikationssystem, das nach dem Frequenzmultiplexverfahren betrieben wird. Die optische Faser 1 enthält in frequenzcodierter Form Information, die für eine oder mehrere der angeschlossenen Einheiten bestimmt ist. Zur Auskopplung dieser Information dienen steckbare Koppelelemente, die an die optische Faser angeschlossen sind und an denen bei Bedarf Licht ausgekoppelt werden kann. Diese Auskopplung erfolgt, indem ein optischer Stecker in das Koppelelement eingeführt wird. Mit den Bezugszeichen 2a bis 2d sind Koppelelemente gekennzeichnet, in denen diese optische Verbindung zur optischen Faser hergestellt ist und infolgedessen ein Teil des in der Sammelleitung 1 vorhandenen Lichts ausgekoppelt wird. Bei den Bezugszeichen 3a, 3b sind Koppelelemente dargestellt, in denen kein Stecker eingeführt ist und in denen keine Auskopplung erfolgt. Der optische Verlust dieser nicht benutzten Koppelelemente sollte idealerweise Null betragen. Zur Auffrischung des in der optischen Faser 1 transportierten Lichts dient ein optischer Breitbandverstärker 8, beispielsweise ein Farbstofflaser.

Die Ein- oder Auskopplung einer bestimmten Frequenz oder eines Frequenzbands erfolgt mit Hilfe von sogenannten Farbcodierern. Bei den Bezugszeichen 5a, 5b sind derartige Farbcodierer dargestellt, die über Abzweigleitungen (optische Fasern) 4a, 4b und Koppelelemente 2a, 2b an die optische Faser angeschlossen werden. Bei Bezugszeichen 6 ist ein Farbcodierer gezeigt, der direkt in den Lichtweg der optischen Faser 1 eingebaut werden kann.

Die Koppelelemente 2c, 2d sind selbst über eine optische Faser 7 miteinander verbunden; damit kann beispielsweise der Zweig 1a, 1b der optischen Übertragungsleitung für Wartungszwecke überbrückt werden.

Sollen in bestimmte Abschnitte der optischen Faser 1 nur bestimmte Frequenzbänder gelangen, so kann dies mit Bandfiltern gesteuert werden, die beispielsweise mit einem nicht benutzten Koppelelement 3a vereinigt sind.

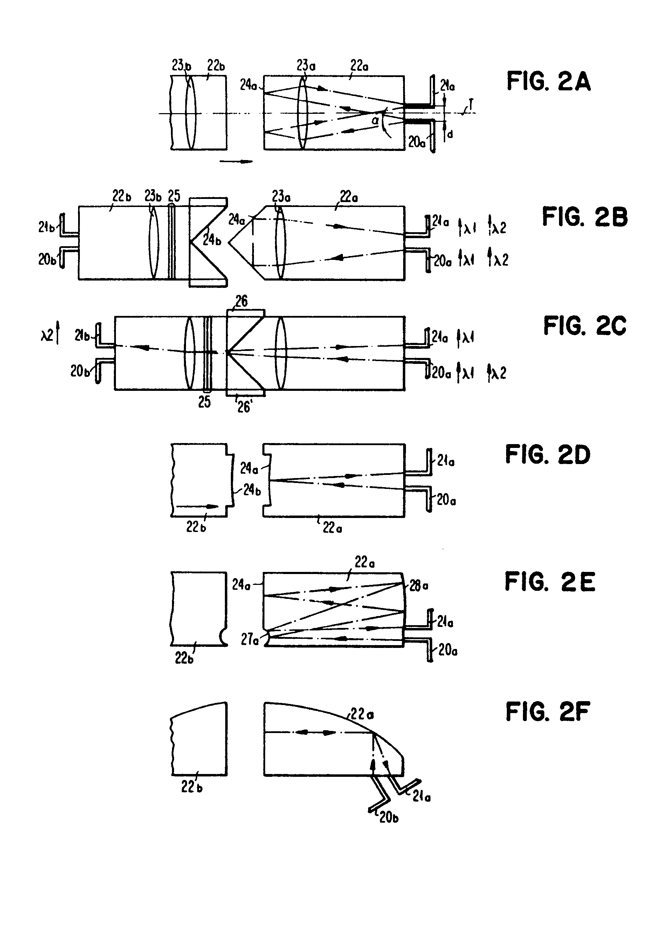

In Fig. 2 sind verschiedene Ausführungsformen der selbstkollimierenden Koppelelemente dargestellt, die zur Verbindung von Fasern oder zum Anschluß von externen Geräten an die optischen Fasern verwendet werden können. Das Prinzip eines selbstkollimierenden Koppelelements ist in Fig. 2A gezeigt. Die strich-punktierten Linien stellen stark vereinfacht die Strahlengänge dar.

Das Koppelelement besteht aus zwei, im wesentlichen symmetrischen Hälften, von denen die eine, mit 22a bezeichnete, an der gewünschten Anschlußstelle in die optische Sammelleitung eingebaut wird. Zum Herstellen der Verbindung wird die zweite Hälfte (mit 22b bezeichnet) auf die fest eingebaute aufgesteckt. Einander entsprechende Teile der beiden Hälften tragen gleiche Bezugszeichen, die jeweils durch den Zusatz a bzw. b unterschieden sind.

Die fest eingebaute Hälfte eines Koppelelements besteht aus einem Grundkörper 22a, an den zwei optische Fasern 20a, 21a in einem gegenseitigen kleinen Abstand d symmetrisch zur Mittelachse T angeschlossen sind. Die optischen Fasern 20a, 21a stellen die optische Sammelleitung dar und führen das Eingangssignal. Das aus Faser 20a in einem wirksamen Aperturkegel $x$ austretende Licht wird durch ein abbildendes Element 23a, z. B. eine Linse, auf eine Referenzfläche 24a gegeben, dort reflektiert und durch das abbildende Element 23a auf den Eingang der optischen Faser 21a fokussiert. Der Grundkörper 22a des Koppelelements ist vorzugsweise als kompakter durchsichtiger Block ausgebildet; derartige optische Bauelemente können preiswert und doch mit hoher Präzision aus durchsichtigen Kunststoffen hergestellt werden. Die Abmessungen des Grundkörpers 22a brauchen nur einige cm zu betragen, so daß sich ein leicht zu handhabendes optisches Bauelement ergibt, dessen einzelne, miteinander vergossene Bestandteile unverrückbar sind und somit keinen Justieraufwand mehr erfordern. Der optische Verlust dieses Elements kann sehr gering gehalten werden.

Zum Auskoppeln von Licht aus dem Koppelelement nach Fig. 2A genügt es, die Reflexion an Referenzfläche 24a zu stören, beispielsweise durch Annähern einer zweiten identischen Hälfte 22b mit Referenzfläche 24b oder durch optischen Anschluß dieser zweiten Hälfte mit Hilfe einer Immersionsflüssigkeit.

In den Fig. 2B und C ist eine Ausführungsform gemäß Anspruch 1 eines kompletten optischen Koppelelements nach dem Prinzip von Fig. 2A dargestellt. Es handelt sich um einen vielfach verwendbaren optischen Stecker, dessen beide Bestandteile kompakte Kunststoffblöcke darstellen, die verschiedene optische Elemente einschließen. Fig. 2B zeigt den Stecker im getrennten Zustand, Fig. 2C die beiden vereinigten Steckerhälften.

Die Referenzfläche 24a des mit der optischen Übertragungsleitung 20a, 21a verbundenen Steckerstücks 22a weist in diesem Fall die Form eines Dachkant-Prismas auf. Das vom Anschluß 20a mit den Wellenlängen $\lambda 1$, $\lambda 2$ in den Teil 22a des Koppelelements eintretende Licht gelangt nach zweimaliger Totalreflexion am Dachkant-Prisma 24a praktisch verlustfrei zum Anschluß 21a der optischen Sammelleitung. Der Abstand der Linse 23a von den Anschlußpunkten der Fasern 20a, 21 entspricht ihrer Brennweite.

Nach Aufsetzen des Gegenstücks 22b mit einem inversen Dachkant-Prisma 24b wird die Totalreflexion an der Oberfläche 24a gestört und das Licht tritt über das Abbildungselement 23b in die Ausgangsfaser 21b. Die Ausgangsfaser 20b wird bei dieser Betriebsweise nicht benutzt.

Da beim Frequenzmultiplexverfahren nur ein bestimmter engerer Frequenzbereich aus der optischen Übertragungsleitung ausgekoppelt werden soll, enthält das Gegenstück 22b ein optisches Bandfilter 25 (z. B. ein Interferenzfilter). Dieses Filter läßt nur die gewünschten Wellenlängen (z. B. $\lambda 2$) durch, die übrigen Wellenlängen (z. B. $\lambda 1$) werden reflektiert und gelangen wieder in die optische Übertragungsleitung 21a.

Zur Vermeidung von optischen Verlusten während des Aufsteckens von Gegenstück 22b auf das Dachkant-Prisma können im Bereich des inversen Dachkant-Prismas 24b am Gegenstück 22b Spiegel 26, 26' angebracht werden.

Fig. 2D zeigt in schematischer Darstellung ein selbstkollimierendes, optisches Koppelelement, bei dem die Referenzfläche 24a gleichzeitig abbildende Eigenschaften hat (sogenannte integrierte Linse). Das Gegenstück 22b des Steckers in Fig. 2D ist entsprechend der äußeren Begrenzung von Fläche 24a geformt. Diese Ausführungsform bietet sich insbesondere an, wenn das Koppelelement aus einem Präzisions-Kunststoffteil gefertigt werden soll. Im nicht vereinigten Zustand dieses Koppelelements kann die Referenzfläche 24a mit einer reflektierenden Abdeckung versehen werden.

In Fig. 2E werden als abbildende Elemente zwei sphärische Spiegel 27a, 28a in einer Anordnung mit außeraxialem Strahlengang verwendet. Spiegel 27 liegt als Konvexspiegel dem Anschluß der optischen Fasern 20a, 21a gegenüber und reflektiert das eintretende Licht auf einen Konkavspiegel 28, der die Strahlung parallel auf die Referenzfläche 24a richtet, wo sie reflektiert wird bzw. in das Gegenstück 22b des Kopplers gelangt.

In Fig. 2F bestehen die beiden Hälften des Koppelelements aus Rotationsparaboloiden, denen die optischen Fasern 20a, 21a in der Nähe ihres Brennpunkts zugeführt werden. Einzelheiten dieser Ausführungsform sind in der gleichzeitig eingereichten europäischen Patentanmeldung (Veröffentlichungsnummer 40 705, internes Aktenzeichen GE 979 036) beschrieben.

Die Referenzflächen der Koppelelemente nach den Fig. 2E und 2F können im nicht vereinigten Zustand des Steckers mit einer reflektierenden Abdeckung versehen werden oder aber als Dachkant-Prisma mit Totalreflexion ausgebildet sein.

Fig. 3 zeigt verschiedene Ausführungsformen von Einrichtungen zur optischen Frequenzmultiplexierung. Diese leiten sich aus dem in Fig. 2A dargestellten selbstkollimierenden Koppelelement ab und entstehen, wenn auf der Referenzfläche 24 der in die Sammelleitung eingebauten Hälfte eine wellenlängenselektive Komponente gebracht wird.

In Fig. 3A wird als dispergierendes Element ein Mehrschicht-Interferenzfilter 33 verwendet. Das aus der Faser 30 in das Koppelelement 31 eintretende Licht wird mit einer Abbildungsoptik 32 in ein Parallelbündel umgewandelt und am Interferenzfilter 33 wellenlängenselektiv reflektiert. Das reflektierte Licht wird durch die Abbildungseinrichtung 32 zum Ausgang 34 fokussiert, an dem beispielsweise weitere optische Fasern oder photoempfindliche Elemente angeschlossen sein können.

In den Fig. 3B bis 3D wird als dispergierendes Element ein Stufengitter 35 verwendet. Die optische Faser 30 wird in der Symmetrieebene T des Anschlußelements 31 zugeführt. Das aus der Faser 30 austretende Licht wird durch das Stufengitter symmetrisch zur Symmetrieebene nach Wellenlängen aufgefächert und kann durch Photoempfänger, die an entsprechenden Stellen der Anschlußebene 36 des Koppelements 31 angebracht sind, registriert werden. Auf diese Weise erfolgt eine Decodierung des in der optischen Faser 30 enthaltenen Frequenzgemischs.

Soll andererseits ein bestimmtes enges Frequenzband von einer Lichtquelle in die optische Faser 30 eingespeist werden, so läßt sich dies durch Umkehrung des eben beschriebenen Lichtwegs erreichen. Werden Lichtquellen an solchen Stellen der Ebene 36 angebracht, die dem gewünschten Frequenzband entsprechen, so gelangt infolge der Dispersion am Reflexionsgitter 35 vom Spektrum dieser Lichtquelle nur der gewünschte Ausschnitt in die optische Faser 30. Bei dieser Betriebsart arbeiten die Elemente nach Fig. 3A bis 3D als optische Frequenzcodierer.

Der Anschluß von Photoempfängern oder Lichtquellen an die Elemente nach Fig. 3A bis 3D kann auf verschiedene Weise erfolgen. In Fig. 3B ist eine integrierte lineare Anordnung 34 von Photodetektoren und/oder Lichtquellen (z. B. LED's) dargestellt, die symmetrisch zum Anschlußpunkt der optischen Faser 30 montiert ist. Beispielsweise kann die obere Hälfte dieser Anordnung als Photodetektor-Reihe ausgebildet sein, die untere Hälfte als LED-Reihe.

In Fig. 3C werden diskrete opto-elektronische Bauelemente 38, 39 (Photodioden) und LED's verwendet, die über individuelle optische Fasern 37 mit der Ebene 36 des Anschlußelements 31 verbunden sind.

In Fig. 3D ist ein abstimmbares Element dargestellt, in dem ein elektro-optischer Wandler 40 über eine optische Faser 41 angeschlossen ist; der Anschlußpunkt der optischen Faser 41 auf der Fläche 36 ist dabei mechanisch einstellbar; auf diese Weise kann die gewünschte Wellenlänge durch mechanische Verschiebung bestimmt werden.

Alle in Fig. 3 dargestellten Ausführungsformen von Bandfiltern und optischen Codierern/Decodierern werden vorzugsweise als kompakte Baublöcke aus Präzisions-Kunststoffteilen hergestellt.

Die in den Fig. 3B bis 3D dargestellten Elemente entsprechen den Kanalcodierern 5 in Fig. 1; das Filter nach Fig. 3A kann als Bandfilter 3a in Fig. 1 eingesetzt werden.

Fig. 4 zeigt einen optischen Frequenz-Codierer/Decodierer, der direkt in die optische Übertragungsleitung eingebaut werden kann und somit dem Element 6 in Fig. 1 entspricht. Dieses Element besteht aus zwei Hälften 42a, 42b, die wieder als Präzisions-Kunststoffteil gearbeitet sein können. In jeder Hälfte ist ein abbildendes Element 43a, 43b enthalten. Die Schnittfläche zwischen beiden Hälften besteht aus zwei ineinandergreifenden Reflexionsgittern 44a, 44b, zwischen denen wahlweise eine ebenfalls stufenförmige dielektrische Mehrschichtanordnung 45 (ein Interferenzfilter) angebracht ist. Die Anschlüsse 46, 47 der optischen Sammelleitung sind an den parallelen Endflächen des Codierelements angebracht, entweder in dessen Symmetrieachse T oder symmetrisch dazu.

Vom Frequenzgemisch, das aus Faser 46 in den Codierer eintritt, tritt der Teil ungehindert durch Stufengitter und Mehrschichtanordnung hindurch, der dem Durchlaßbereich dieses Interferenzfilters entspricht; das ausgefilterte Frequenzband verläßt den Codierer über die optische Faser 47. Ist kein Interferenzfilter eingebaut, gelangen alle Frequenzen in die Ausgangsfaser 47, da beide Stufengitter zusammen keine relative Phasenverschiebung des durchtretenden Lichts hervorrufen.

Das am Reflexionsgitter 44b reflektierte Licht wird dagegen aufgespalten und kann nach Wellenlängen sortiert durch Photorezeptoren 48 gemessen werden, die in der Anschlußebene der optischen Faser 46 angebracht sind. Statt der Photodetektoren können auch weitere optische Fasern angeschlossen werden. Zum Einspeisen von selektiv ausgewählten Wellenlängen in die Faser 46 können statt der Photodetektoren 48 auch Lumineszenzdioden angebracht werden; wenn die optische Übertragungsleitung mit Richtcharakteristik (d. h. nur in eine Richtung) betrieben werden soll, dienen zum Einspeisen selektiver Wellenlängen in die optische Faser Lumineszenzdioden 49 auf der Anschlußfläche der Ausgangsfaser 47.

In einer weiteren Anwendung können die anhand von Fig. 2 erläuterten Koppelelemente zum Aufbau von vernetzten optischen Übertragungsleitungen dienen, die gegen Ausfall einzelner Komponenten geschützt sind. Die Koppelemente nach Fig. 2 werden in diesem Fall als Strahlteiler betrieben, in denen die Totalreflexion an der Referenzfläche 24a nicht vollkommen, sondern nur teilweise aufgehoben wird. Das Teilerverhältnis läßt sich dabei in weiten Grenzen einstellen, beispielsweise durch Einhaltung eines definierten Abstands der beiden einander genäherten Gegenflächen 24a und 24b oder durch Einführung eines Zwischenmediums mit geeignet gewähltem Brechungsindex.

In Fig. 5A ist ein Übertragungsnetz mit derartigen Strahlteilern dargestellt, das Sicherheit gegen den Ausfall einer Übertragungsleitung zwischen zwei Knoten 51 und 54 bietet. Das über die optische Faser 50 eintreffende Licht wird dazu teilweise durch Reflexion an der Grenzfläche des Koppelelements 51 in die optische Faser 53 geleitet und zum anderen Teil durch Transmission im Koppelelement 51 in die Leitung 52. Selbst bei Ausfall einer Faser 52 oder 53 ist in jeder der Ausgangsfasern 55, 56 noch ein Signal abgreifbar.

Fig. 5B zeigt ein Beispiel eines weiter vermaschten Netzes, das sowohl gegen Leitungsausfall als auch gegen Ausfall eines Koppelelementes schützt. Auf mindestens einer der Ausgangsleitungen 69, 70, 71 ist ein Signal abnehmbar, wenn eine der Leitungen 62, 63, 64, 66 ausfällt oder Störungen eines Koppelelements 65, 68 auftreten, die dessen Transmission, Reflexion oder beides beeinträchtigen.

**Patentansprüche**

1. Optisches Kommunikationssystem mit einer aus Lichtwellenleitern (optischen Fasern) bestehenden Sammelleitung (1), bei dem selbstkollimierende optische Koppelelemente (2, 3, 6) zum Anschluß an die Sammelleitung vorgesehen sind, dadurch gekennzeichnet, daß die Koppelemente aus einer ersten selbstkollimierenden Hälfte (22a) bestehen, die mit zwei Anschlüssen (20a, 21a) in die Sammelleitung eingebaut ist und deren Frontfläche die Form eines Prismas ausweist, an dem bei Abwesenheit der zweiten Hälfte des Koppelelements das aus dem einen Anschluß (20a) der Sammelleitung austretende Licht auf den zweiten Anschluß (21a) total reflektiert wird und daß zum Herstellen der optischen Kopplung die zweite selbstkollimierende Hälfte (22b) des Koppelelements mit einer zur Frontfläche der ersten Hälfte forminversen Frontfläche und mindestens einem Anschluß für eine optische Faser (21b) auf die erste Hälfte des Koppelelements gesteckt wird.

2. Optisches Kommunikationssystem mit einer aus Lichtwellenleitern (optischen Fasern) bestehenden Sammelleitung (1) bei dem selbstkollimierend optische Koppelelemente (2, 3, 6) zum Anschluß an die Sammelleitung vorgesehen sind, dadurch gekennzeichnet, daß die Koppelemente aus einer ersten selbstkollimierenden Hälfte (22a) bestehen, die mit zwei Anschlüssen (20a, 21a) in die Sammelleitung eingebaut ist und deren Frontfläche mit einem Spiegel abgedeckt ist, um bei Abwesenheit der zweiten Hälfte des Koppelelements das aus dem einen Anschluß (20a) der Sammelleitung austretende Licht auf den zweiten Anschluß (20b) zu reflektieren und daß zum Herstellen der optischen Kopplung der Spiegel von der ersten Hälfte des Koppelelements abgenommen wird und die zweite selbstkollimierende Hälfte (22b) des Koppelelements mit mindestens einem Anschluß für eine optische Faser (21b) auf die erste Hälfte gesteckt wird.

3. Optisches Kommunikationssystem nach Anspruch 1 oder 2, dadurch gekennzeichnet, daß beide Hälften (22a, 22b) der Koppelemente aus durchsichtigen Blöcken mit abbildenden Elementen (Linsen 23a, b, Spiegel 27, 28) bestehen.

4. Optisches Kommunikationssystem nach Anspruch 1 oder 2, dadurch gekennzeichnet, daß das abbildende Element eine rotationsparaboloide Oberfläche des Koppelelements ist, dem die optischen Fasern in der Nähe des Brennpunkts zugeführt werden (Fig. 2F).

5. Optisches Kommunikationssystem nach einem der Ansprüche 1 bis 4, dadurch gekennzeichnet, daß die Sammelleitung im optischen Frequenzmultiplexverfahren betrieben wird.

6. Optisches Kommunikationssystem nach Anspruch 5, dadurch gekennzeichnet, daß die aufsteckbare Hälfte (22b) des Koppelelements ein frequenzselektierendes Element (Interferenzfilter 25) enthält.

7. Optisches Kommunikationssystem nach Anspruch 5 oder 6, dadurch gekennzeichnet, daß die aufsteckbare Hälfte des Koppelelements über Lichtwellenleiter (4a) mit einem optischen Frequenzmultiplexer/Demultiplexer (5a) verbun+den ist.

8. Optisches Kommunikationssystem nach Anspruch 7, dadurch gekennzeichnet, daß der optische Frequenzmultiplexer/Demultiplexer aus einem selbstkollimierenden Bauteil (31) besteht, auf dessen einer Endfläche in symmetrischer Anordnung zur Mittelachse (T) ein Lichtwellenleiter (30) und ein oder mehrere Photoempfänger bzw. Strahlungsquellen (34) angeordnet sind und dessen andere Endfläche aus einem optischen Stufengitter (35) besteht.

9. Optisches Kommunikationssystem nach Anspruch 8, dadurch gekennzeichnet, daß alle Photoempfänger andererseits und alle Strahlungsquellen andererseits auf jeweils verschiedenen Seiten der Mittelachse (T) angeordnet sind.

10. Optisches Kommunikationssystem nach einem der Ansprüche 7 bis 9, dadurch gekennzeichnet, daß der Frequenzmultiplexer/Demultiplexer aus zwei selbstkollimierenden Hälften (42a, 42b) mit jeweils einer als Stufengitter (44a, 44b) ausgebildeten Endfläche besteht, wobei die Stufengitter ineinandergreifen und an mindestens einer der den Stufengittern gegenüberliegenden Endflächen Photoempfänger oder Strahlungsquellen (48) angebracht sind.

11. Optisches Kommunikationssystem nach einem der Ansprüche 1 bis 10, dadurch gekennzeichnet, daß die Koppelelemente als Strahlteiler in einem vermaschten Netz optischer Lichtwellenleiter verwendet werden.

## Claims

1. Optical communication system with a bus (1) consisting of light wave guides (optical fibers), wherein self-collimating optical couplers (2, 3, 6) are provided for connection to the bus, characterized in that the couplers consist of a first collimating half (22a) having two terminals (20a, 21a) connected to the bus and whose front face has the shape of a prism at which in the absence of the second half of the coupler the light exiting from one terminal (20a) of the bus is totally reflected onto the second terminal (21a), and that for optical coupling, the second self-collimating half (22b) of the coupler, having an inversely shaped front face and at least one terminal for an optical fiber (21b), is plugged to the first half of the coupler.

2. Optical communication system with a bus (1) consisting of light wave guides (optical fibers), wherein self-collimating optical couplers (2, 3, 6) are provided for connection to the bus, characterized in that the couplers consist of a first collimating half (22a) having two terminals (20a, 21a) connected to the bus and whose front face is covered with a mirror to reflect in the absence of the second half of the coupler the light exiting from one terminal (20a) of the bus onto the second terminal (20b), and that for optical coupling, the mirror is removed from the first half of the coupler and the second self-collimating half (22b) of the coupler, having at least one terminal for an optical fiber (21b), is plugged to the first half.

3. Optical communication system according to claim 1 or 2, characterized in that both halves (22a, 22b) of the couplers consist of transparent blocks with imaging elements (lenses 23a, b, mirrors 27, 28).

4. Optical communication system according to claim 1 or 2, characterized in that the imaging element is a paraboloid of revolution surface of the coupler to which the optical fibers are connected in the vicinity of the focal point (Fig. 2F).

5. Optical communication system according to any one of the claims 1 to 4, characterized in that the bus is operated in the optical frequency multiplex mode.

6. Optical communication system according to claim 5, characterized in that the pluggable half (22b) of the coupler comprises a frequency-selecting element (interference filter 25).

7. Optical communication system according to claim 5 or 6, characterized in that the pluggable half of the coupler is connected to an optical frequency multiplexer/demultiplexer (5a) through lightwave guides (4a).

8. Optical communication system according to claim 7, characterized in that the optical frequency multiplexer/demultiplexer consists of a self-collimating component (31), on one end face of which in symmetrical arrangement to the center axis (T) a lightwave guide (30) is positioned and the other end face of which consists of an optical echelon (35).

9. Optical communication system according to claim 8, characterized in that all photoreceivers on the one hand and all sources of radiation on the other are in each case arranged on different sides of the center axis (T).

10. Optical communication system according to any one of the claims 7 to 9, characterized in that the frequency multiplexer/demultiplexer consists of two self-collimating halves (42a, 42b) each having one end face designed as an echelon (44a, 44b), wherein the echelons engage each other and photoreceivers and/or sources of radiation (48) are arranged on at least one of the end faces opposite the echelons.

11. Optical communication system according to any one of the claims 1 to 10, characterized in that the couplers are used as beam splitters in a meshed network of optical lightwave guides.

## Revendications

1. Système de transmission optique comportant un bus de transmission (1) constitué par des guides d'ondes lumineuses (fibres optiques), où il est prévu des éléments de couplage (2, 3, 6) optiques auto-collimateurs destinés à être connectés avec ledit bus, caractérisé en ce que lesdits éléments de couplage sont constitués par une première partie auto-collimateur (22a) intégrée au moyen de deux connexions (20a, 21a) audit bus et dont la surface frontale a la forme d'un prisme sur laquelle, lorsque la seconde moitié dudit élément de couplage n'est pas couplée, les rayons lumineux issus d'une connexion (20a) dudit bus sont réfléchis de façon totale pour être renvoyés vers la seconde connexion (21a) et, en ce que, pour établir le couplage optique, la seconde moitié auto-collimateur (22b) dudit élément de couplage comportant une surface frontale de forme complémentaire à celle de ladite première moitié et au moins une connexion pour une fibre optique (21b) est enfichée, dans la première moitié dudit élément de couplage.

2. Système de transmission optique comportant un bus de transmission (1) constitué par des guides d'ondes lumineuses (fibres optiques), où il est prévu des éléments de couplage (2, 3, 6) optiques auto-collimateurs destinés à être connectés avec ledit bus, caractérisé en ce que lesdits éléments de couplage sont constitués par une première partie auto-collimateur (22a) intégrée au moyen de deux connexions (20a, 21a) audit bus et dont la surface frontale est recouverte d'un miroir permettant, lorsque la seconde moitié dudit élément de couplage n'est pas couplée, de réfléchir les rayons lumineux issus d'une des connexions (20a) dudit bus sur ladite seconde connexion (20b) et, en ce que, pour établir le couplage optique, le miroir est retiré de la première moitié dudit élément de couplage et la seconde moitié auto-collimateur (22b) dudit élément de couplage comportant au moins une connexion pour une fibre optique (21b) est enfichée dans la première moitié dudit élément de couplage.

3. Système de transmission optique selon la revendication 1 ou 2, caractérisé en ce que les deux moitiés (22a, 22b) desdits éléments de couplage sont constituées par des blocs transparents comportant des éléments de reproduction (lentilles 23a, 23b miroirs 27, 28).

4. Système de transmission optique selon la revendication 1 ou 2, caractérisé en ce que ledit élément de reproduction est une surface dudit élémente de couplage ayant la forme d'un paraboloide de révolution, à proximité du point focal duquel sont appliquées lesdites fibres optiques (fig. 2F).

5. Système de transmission optique selon une des revendications 1 à 4, caractérisé en ce que ledit bus est exploité selon la méthode de multiplexage en fréquence optique.

6. Système de transmission optique selon la revendication 5, caractérisé en ce que la moitié enfichable (22b) dudit élément de couplage contient un élément de sélection de fréquences (filtre d'interférence 25).

7. Système de transmission optique selon la revendication 5 ou 6, caractérisé en ce que la moitié enfichable dudit élément de couplage est connectée à travers un guide, d'ondes lumineuses (4a) avec un multiplexeur/démultiplexeur à fréquences optique (5a).

8. Système de transmission optique selon la revendication 7, caractérisé en ce que le multiplexeur/démultiplexeur à fréquences est constitué d'un composant auto-collimateur (31) où sur une de ses surfaces d'extrémité sont disposés selon un montage symétrique par rapport à l'axe médian (T), un guide d'onde lumineuses (30) et un ou plusieurs photorécepteurs voire sources de lumière (34) et dont l'autre surface d'extrémité est réalisée en forme d'échelle optique (35).

9. Système de transmission optique selon la revendication 8, caractérisé en ce que, d'une part, tous les photodétecteurs et, d'autre-part, toutes les sources de lumières sont disposés respectivement sur des côtés différents dudit axe médian (T).

10. Système de transmission optique selon une des revendications 7 à 9, caractérisé en ce que le multiplexeur/démultiplexeur à fréquences est constitué de deux moitiés auto-collimateurs (42a, 42b) comportant chacune une surface d'extrémité réalisée en forme d'échelle optique (44a, 44b) où lesdits échelons s'emboîtent les uns dans les autres et, où des photodétecteurs ou sources de rayons lumineux (48) sont disposés sur au moins une des dites surfaces d'extrémité opposées auxdits échelons optiques.

11. Système de transmission optique selon une des revendications 1 à 10, caractérisé en ce que lesdits éléments de couplage sont utilisés comme diviseurs de rayon dans un réseau maillé de guides d'ondes optiques.

FIG. 1

FIG. 3A

FIG. 3B

FIG. 3C

FIG. 3D

FIG. 4

FIG. 5A

FIG. 5B

FIG. 2A

FIG. 2B

FIG. 2C

FIG. 2D

FIG. 2E

FIG. 2F